# EUROPEAN PATENT APPLICATION

(11) **EP 2 226 764 A1**
(43) Date of publication of application: **08.09.2010**
(21) Application number: 10002182.3
(22) Date of filing: 03.03.2010
(51) Int. Cl.: G06T 7/00

(54) **Image analysis device, image analysis method, image sensing device, image analysis program, and storage medium**

(30) Priority: 06.03.2009 JP 2009054238
(71) Applicant: Sharp Kabushiki Kaisha, Osaka-shi, Osaka 545-8522 (JP)
(72) Inventor: Yamashita, Daisuke, Osaka-shi Osaka 545-8522 (JP); Iwasaki, Keisuke, Osaka-shi Osaka 545-8522 (JP)
(74) Representative: Müller - Hoffmann & Partner

(57) **Abstract**

A touch position detection device includes a light sensor-containing LCD which informs a user, in accordance with a result of analyzing an image captured by light sensors, that it is difficult to identify where a pointing body is located.

## Description

### Technical Field

The present invention relates to (i) an image analysis device for, by analyzing a captured image containing an image of the image sensing object, identifying where the image of the image sensing object is located, (ii) an image sensing device including the image analysis device, and (iii) an image analysis method.

### Background Art

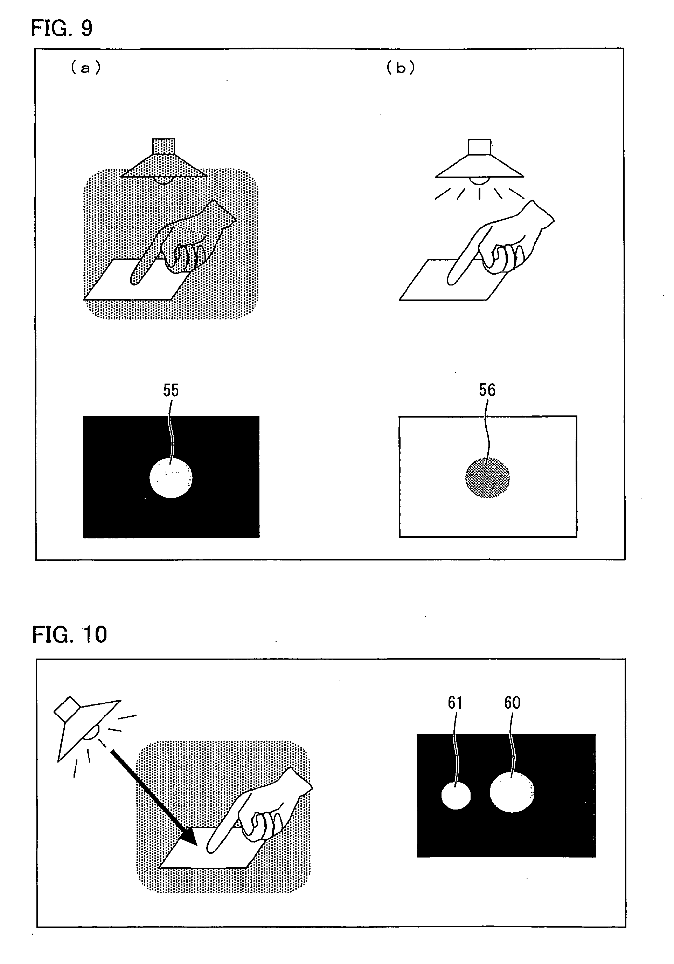

A touch panel has been realized which identifies where a pointing body, such as a user's finger or a stylus, is pointing on the touch panel by (i) capturing an image containing an image of a pointing body, and then (ii) carrying out pattern matching with respect to the captured image. An example of such a touch panel is disclosed in Patent Literature 1. Fig. 9 is an explanatory view schematically illustrating a process carried out by a liquid crystal display panel device disclosed in Patent Literature 1.

The liquid crystal display panel device identifies where a fingertip is touching on a liquid crystal panel, by carrying out image processing with respect to signals from light sensors for detecting a finger, which light sensors are arranged in a matrix manner in the liquid crystal panel. As illustrated in Fig. 9, the liquid crystal display panel device detects brightness of external light which is incident on the liquid crystal panel. More specifically, in a case where the external light has a high level of brightness (see Fig. 9(b)), the liquid crystal display panel device detects a finger shadow (indicated by a spot 56 in Fig. 9) caused by the external light. In contrast, in a case where the external light has a low level of brightness (see Fig. 9(a)), the liquid crystal display panel device detects light (indicated by a spot 55 in Fig. 9) which is emitted from a backlight device and then reflected from the finger. The liquid crystal display panel device, as described above, selects how to process an image in accordance with the level of brightness of external light.

### Citation list

### Patent Literature 1

Japanese Patent Application Publication, Tokukai No. 2007-183706 A (Publication Date: July 19, 2007)

### Summary of Invention

### Technical Problem

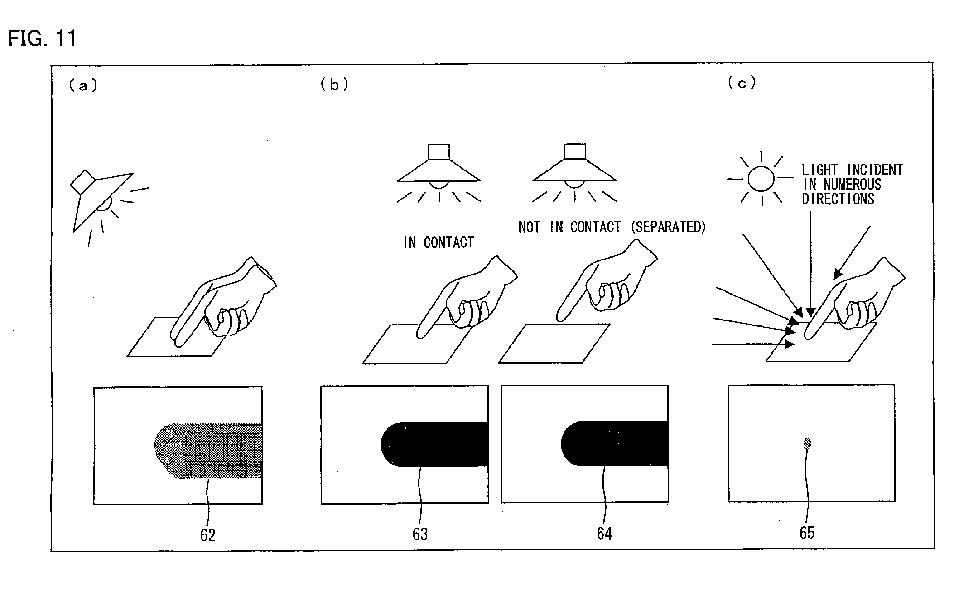

Figs. 10 and 11 are explanatory views illustrating a problem with a conventional touch panel. As illustrated in Fig. 10, in a case where external light generally has a low level of brightness but locally has a higher level of brightness than a level of brightness of reflected light caused by backlight (indicated by a spot 60 in Fig. 10), such a local portion (indicated by a spot 61 in Fig. 10) of the external light is likely to erroneously detected instead of a finger. A normal illuminance sensor carries out sensing with respect to a particular region. Thus, such an illuminance sensor cannot detect a spot of intense light which is incident on a region where the illuminance sensor does not detect any light.

Intense parallel light beams are incident on the liquid crystal panel, in a case where (i) a shadow of a user's finger is detected in an environment in which external light is bright (see Fig. 11) and (ii) the user is in an environment in which a single light source emits light having a high level of illuminance. This may make it difficult to (i) determine whether the finger is in contact with the panel (see Fig. 11(b)), or (ii) detect a plurality of fingers simultaneously (see Fig. 11(a)). In Fig. 11, an image 62 represents a shadow of two overlapping fingers, an image 63 represents a shadow of a finger which is in contact with an image sensing screen, and an image 64 represents a shadow of a finger which is not in contact with the image sensing screen.

In addition, as illustrated in Fig. 11(c), intense light, such as sunlight, which is incident on a liquid crystal panel in all directions causes an image (an image 65) of a finger to be almost invisible. This may make it difficult to detect such a finger.

The above conventional arrangement, however, fails to determine whether there exists an external light environment in which it is possible to appropriately detect a pointing body. This causes a problem that, even if there is a possibility that a pointing body will not be detected appropriately, a user will not be informed of such a possibility.

The present invention has been accomplished in view of the above problem. It is an object of the present invention to provide an image analysis device and an image sensing device each of which, if there is a possibility that an image sensing object, i.e., a pointing body, will not be detected appropriately, can inform a user of such a possibility.

### Solution to Problem

In order to solve the above problem, an image analysis device of the present invention is an image analysis device for identifying where an image of an image sensing object is located in an captured image, by analyzing the captured image containing an image of the image sensing object which is in contact with an image sensing screen, the image analysis device, including: an informing section for, in accordance with a result of the analyzing of the captured image, informing that it is difficult to identify where the image of the image sensing object is located in the captured image.

In order to solve the above problem, an image analysis method of the present invention is an image analysis method for use in an image analysis device for identifying where an image of an image sensing object is located in an captured image, by analyzing the captured image containing an image of the image sensing object which is in contact with an image sensing screen, the image analysis method, including the step of: informing, in accordance with a result of the analyzing of the captured image, that it is difficult to identify where the image of the image sensing object is located in the captured image.

According to the above arrangement, the image analysis device analyzes the captured image containing the image of the image sensing object which is in contact with the image sensing screen. The image sensing object is, for example, a user's finger or a stylus, and is an object which points at a position on the image sensing screen. The image analysis device is not necessarily required to include an image sensing screen. The image analysis device is simply required to be capable of acquiring a captured image.

The informing section, in accordance with a result of the analyzing of the captured image, informs a user of difficulty in the locating.

This allows the user to be informed of a possibility, if any, that the image sensing object cannot be detected appropriately. The user can, if informed of such a possibility, use the image analysis device (i.e., capture an image of the image sensing object) in another area, or alter the lighting environment in the surroundings of an area in which an image containing an image of the image sensing object is to be captured. This allows the user to (i) select a lighting environment in which it is possible to appropriately detect the image sensing object, or to (ii) adjust the existing lighting environment in the surroundings so as to achieve a lighting environment in which it is possible to appropriately detect the image sensing object.

Additional objects, features, and strengths of the present invention will be made clear by the description below. Further, the advantages of the present invention will be evident from the following explanation in reference to the drawings.

### Advantageous Effects of Invention

In order to solve the above problem, an image analysis device of the present invention is an image analysis device for identifying where an image of an image sensing object is located in an captured s image, by analyzing the captured image containing an image of the image sensing object which is in contact with an image sensing screen, the image analysis device, including: an informing section for, in accordance with a result of the analyzing of the captured image, informing that it is difficult to identify where the image of the image sensing object is located in the captured image.

In order to solve the above problem, an image analysis method of the present invention is an image analysis method for use in an image analysis device for identifying where an image of an image sensing object is located in an captured image, by analyzing the captured image containing an image of the image sensing object which is in contact with an image sensing screen, the image analysis method, including the step of: informing, in accordance with a result of the analyzing of the captured image, that it is difficult to identify where the image of the image sensing object is located in the captured image.

According to the above arrangement, the image analysis device analyzes the captured image containing the image of the image sensing object which is in contact with the image sensing screen. The image sensing object is, for example, a user's finger or a stylus, and is an object which points at a position on the image sensing screen. The image analysis device is not necessarily required to include an image sensing screen. The image analysis device is simply required to be capable of acquiring a captured image.

The informing section, in accordance with a result of the analyzing of the captured image, informs a user of difficulty in the locating.

This allows the user to be informed of a possibility, if any, that the image sensing object cannot be detected appropriately. The user can, if informed of such a possibility, use the image analysis device in another area or alter the lighting environment in the surroundings. This allows the user to (i) select a lighting environment in which it is possible to appropriately detect the image sensing object, or to (ii) adjust the existing lighting environment in the surroundings so as to achieve a lighting environment in which it is possible to appropriately detect the image sensing object.

### Brief Description of Drawings

Fig. 1

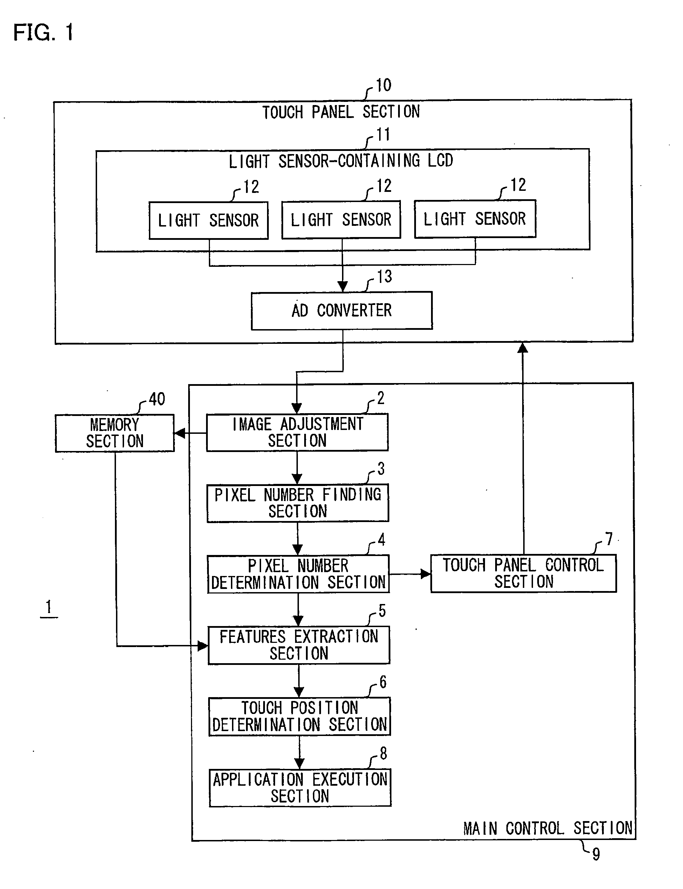

   Fig. 1 is a block diagram illustrating an arrangement of a touch position detection device in accordance with an embodiment of the present invention.
Fig. 2

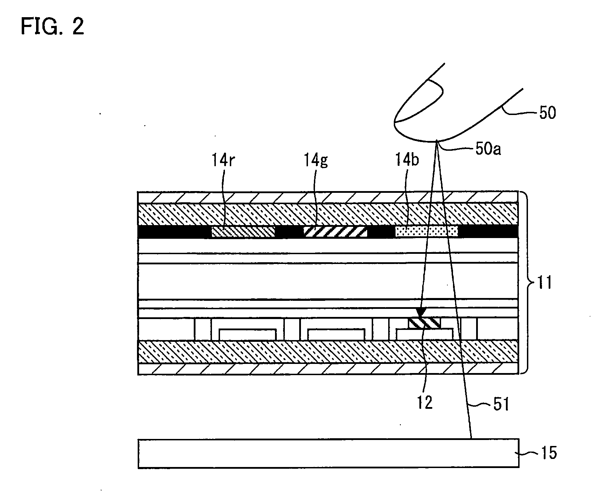

   Fig. 2 is a schematic view illustrating a principle on which a sensor-containing LCD captures a reflected image.
Fig. 3

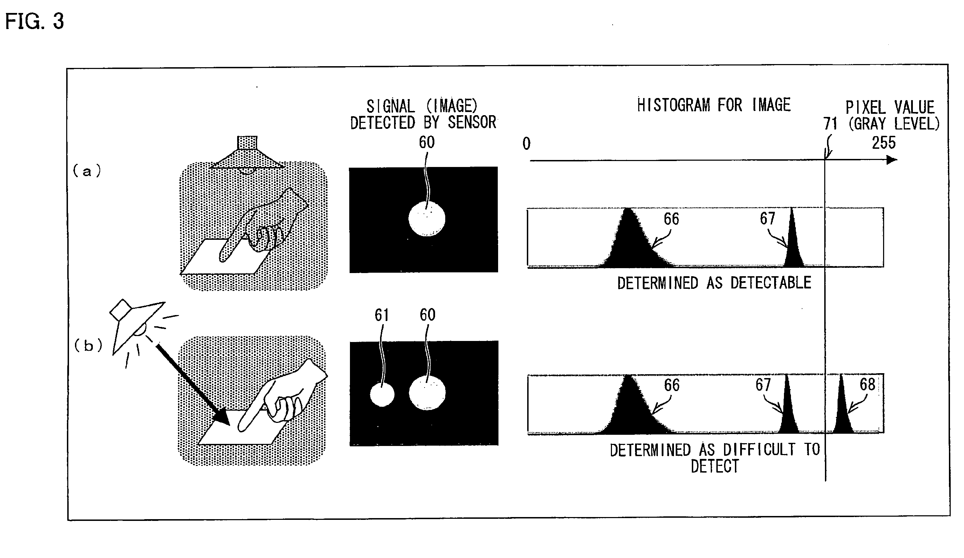

   Fig. 3 is a view explaining processing carried out by a pixel number finding section and a pixel number determination section in a reflection recognition mode.
Fig. 4

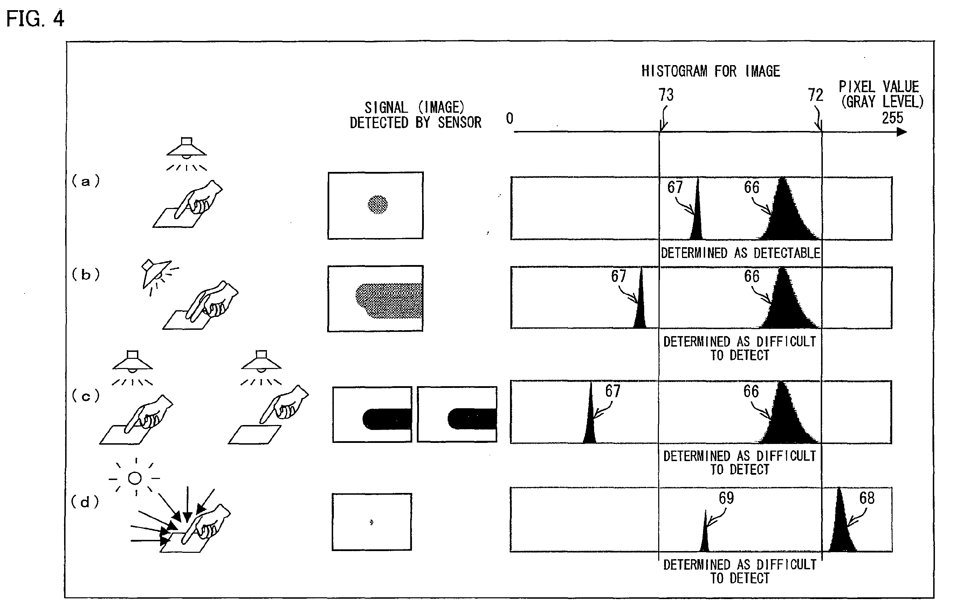

   Fig. 4 is a view explaining a first example of processing carried out by the pixel number finding section and the pixel number determination section in a shadow recognition mode.
Fig. 5

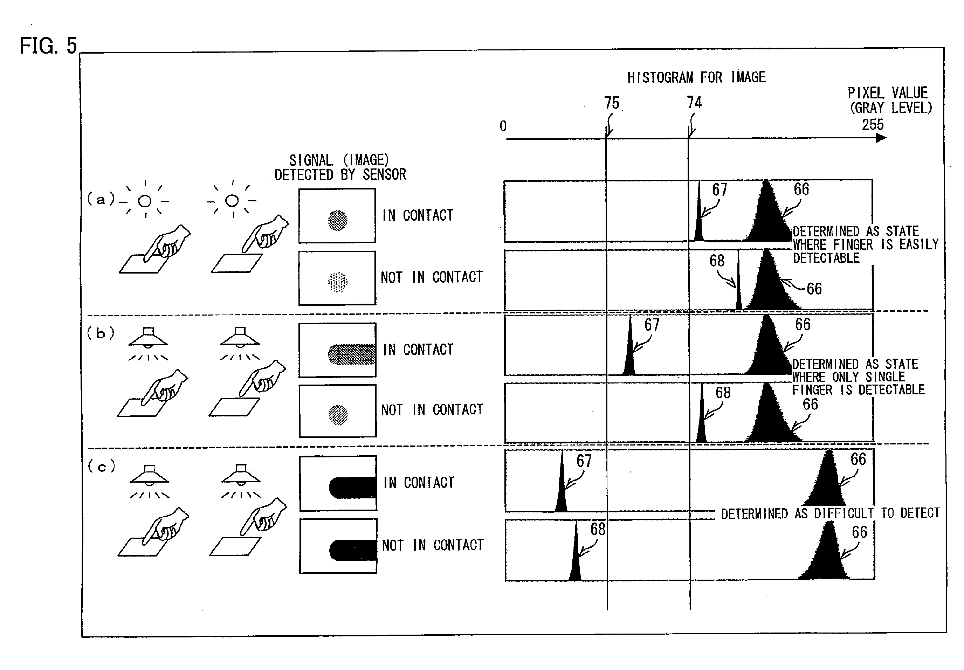

   Fig. 5 is a view explaining a second example of the processing carried out by the pixel number finding section and the pixel number determination section in the shadow recognition mode.
Fig. 6

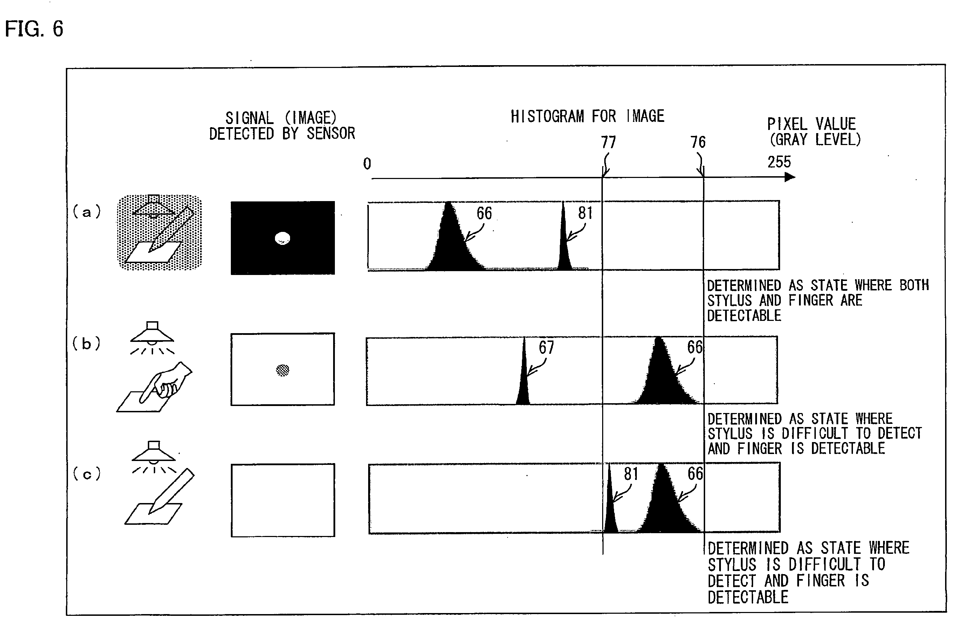

   Fig. 6 is a view explaining the processing carried out by the pixel number finding section and the pixel number determination section in the reflection recognition mode and the shadow recognition mode so as to simultaneously determine (i) whether it is difficult to detect a finger and (ii) whether it is difficult to detect a stylus.
Fig. 7

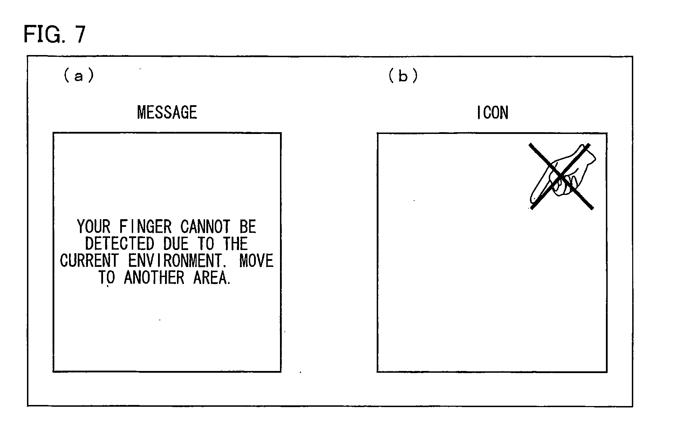

   Fig. 7 is a view illustrating an example of a message and an icon both for informing a user that it is impossible to accurately identify where a finger is located.
Fig. 8

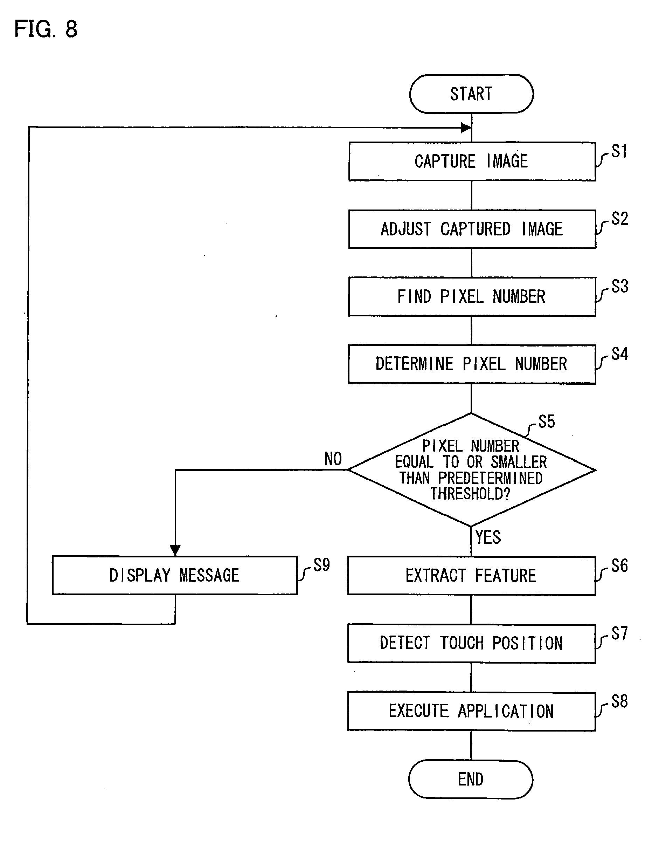

   Fig. 8 is a flowchart illustrating an example flow of touch position detection process carried out by the touch position detection device.
Fig. 9
   Fig. 9 is a view schematically explaining in (a) and (b) how processing is carried out by a conventional liquid crystal display panel device.
Fig. 10
   Fig. 10 is a view explaining a problem caused by a conventional touch panel.
Fig. 11
   Fig. 11 is a view explaining in (a) through (c) a problem caused by the conventional touch panel.

### Description of Embodiments

One embodiment of the present invention is described below with reference to Figs. 1 through 8. The following description deals, as the embodiment of the present invention, with a touch position detection device (image sensing device) 1 which (i) captures an image containing an image of a pointing member such as a user's finger or a stylus (hereinafter collectively referred to as a "pointing body") which points at a position on a touch panel, and (ii) detects, on the basis of the image thus captured, the position (contact position on the touch panel) pointed at by the pointing body.

The touch position detection device 1 allows multiple-point recognition in which multiple fingers can be recognized. In a case where a user makes a multiple-point entry with use of their multiple fingers, an image containing images of those respective fingers is captured.

### (Arrangement of Touch Position Detection Device 1)

Fig. 1 is a block diagram illustrating an arrangement of the touch position detection device 1 of the present embodiment. As illustrated in Fig. 1, the touch position detection device (image analysis device, image sensing device) 1 includes: a touch panel section (image sensing section, informing section) 10; a main control section (image analysis device) 9; and a memory section 40. The touch position detection device 1 causes light sensors (image sensing elements, image sensing device) 12 in the touch panel section 10 to capture an image (captured image) containing an image of a pointing body (image sensing object) which is in contact with an image sensing screen of the touch panel section 10. The touch position detection device 1 then analyzes the captured image so as to identify where the image of the pointing body is located in the captured image.

The memory section 40 stores (i) a control program for the sections, (ii) an OS program, (iii) application programs, and (iv) various data read out while the above programs are being executed. The above programs are executed by the main control section 9. The memory section 40 is constituted by a nonvolatile memory device such as a hard disk or a flash memory.

The touch position detection device 1 further includes a temporary memory section (not shown) constituted by a volatile memory device such as a RAM (random access memory). The temporary memory section is used as a working area in which data is temporarily stored while the main control section 9 is executing the above various programs.

### (Arrangement of Touch Panel Section 10)

The following description deals with an arrangement of the touch panel section 10. The touch panel section 10 includes: a light sensor-containing LCD (liquid crystal panel/display) 11 containing light sensors 12 serving as image sensing elements; and an AD (analog-to-digital) converter 13. As illustrated in Fig. 2, the touch panel section 10 further includes a backlight device 15.

The light sensor-containing LCD 11, which contains the light sensors 12, is capable of not only carrying out a display, but also capturing an image. As such, the light sensor-containing LCD 11 functions as an image sensing screen for capturing an image (hereinafter referred to as a "captured image") containing an image of a pointing body which is in contact with a surface of the light sensor-containing LCD 11 which surface serves as a touch panel.

The light sensor-containing LCD 11 includes red (R), green (G), and blue (B) color filters 14r, 14g, and 14b forming pixels. The light sensors 12 are provided for the respective pixels of the light sensor-containing LCD 11. In other words, the light sensors 12 are arranged in a matrix manner on an active matrix substrate of the light sensor-containing LCD 11. However, neither an arrangement nor the number of the light sensors 12 is limited to the above. Therefore, the arrangement and the number can be altered as appropriate.

Signals produced by the respective light sensors 12 are converted into respective digital signals by the AD converter 13, and are then supplied to an image adjustment section 2.

Fig. 2 is a schematic view illustrating a principle based on which the light sensor-containing LCD 11 captures an image containing an image caused by reflected light. Light 51 emitted from the backlight device 15 is reflected from a finger pad 50a of a finger 50. The reflected light is then detected by the light sensors 12. It is thus possible to capture a reflected image of the finger pad 50a.

The touch panel section 10 can also capture an image containing an image of a shadow caused while a pointing body is blocking external light (light in the surroundings of the pointing body) incident on the light sensors 12. In the present description, a mode in which reflected light is used to capture an image of a pointing body is referred to as a "reflection recognition mode", whereas a mode in which an image caused by a shadow of a pointing body is captured is referred to as a "shadow recognition mode." The reflection recognition mode and the shadow recognition mode can be switched from one to the other (i) in response to a user's instruction or (ii) in accordance with an external light intensity as described in Patent Literature 1.

### (Arrangement of Main Control Section 9)

The following description deals with an arrangement of the main control section 9. The main control section 9 includes: an image adjustment section 2; a pixel number finding section (pixel number finding means) 3; a pixel number determination section (pixel number determination means) 4; a features extraction section 5; a touch position determination section 6; a touch panel control section 7; and an application execution section 8.

The image adjustment section 2 carries out processing such as calibration in which a gain and an offset of an image captured by the touch panel section 10 are adjusted. The image adjustment section 2 supplies the captured image thus adjusted to the pixel number finding section 3. It is assumed in the following description that the captured image is supplied at a precision of 256-level grayscale (8-bit). The image adjustment section 2 also functions as reception means for receiving the captured image from the touch ) panel section 10. The image adjustment section 2 can store, in the memory section 40, the captured image as received and as adjusted.

The pixel number finding section 3 finds the number of pixels, in the captured image supplied from the image adjustment section 2, which have pixel values (luminance values) which fall outside a predetermined pixel-value range. The pixel number finding section 3 then supplies the pixel number thus found (hereinafter referred to as a "beyond-threshold-pixel number") to the pixel number determination section 4. The predetermined pixel-value range refers to a pixel-value range within which the captured image can be regarded as having been captured in a lighting environment in which it is possible to appropriately identify where a pointing body is located. Processing carried out by the pixel number finding section 3 is described below in detail.

The pixel number determination section 4 determines whether or not the beyond-threshold-pixel number found by the pixel number finding section 3 exceeds a predetermined pixel number. The pixel number determination section 4 then supplies a determined result to the touch panel control section 7. In a case where it is determined that the beyond-threshold-pixel number exceeds the predetermined pixel number, there is a high possibility that the captured image has not been captured in a lighting environment in which it is possible to appropriately identify where a pointing body is located. It follows that the pixel number determination section 4 has a function of determining whether or not the captured image has been captured in a lighting environment in which it is possible to appropriately identify where a pointing body is located. Processing carried out by the pixel number determination section 4 is described later in detail.

The touch panel control section 7 controls the touch panel section 10. For example, the touch panel control section 7 selects one of the image capture modes (i.e., selects between the reflection recognition mode and the shadow recognition mode) of the touch panel section 10, and also specifies a display content of the touch panel section 10. In particular, upon receipt, from the pixel number determination section 4, of information indicating that the beyond-threshold-pixel number exceeds the predetermined pixel number, the touch panel control section 7 controls the touch panel section 10 to display a message indicating that it is difficult to identify where the pointing body is located. In other words, in a case where the pixel number determination section 4 determines that the captured image has not been captured in a lighting environment in which it is possible to appropriately identify where a pointing body is located, the touch panel control section 7 controls the touch panel section 10 to display a message indicative of the above determination.

In a case where it is determined that the beyond-threshold-pixel number does not exceed the predetermined pixel number, the features extraction section 5 extracts, from the captured image which has been processed by the image adjustment section 2, features (edge features) which characterizes the pointing body. The features are extracted from each pixel of the captured image by an edge detection process which is carried out by, for example, a Sobel filter. In other words, the features extraction section 5 extracts, from the captured image, feature regions which characterize an image (shape) of the pointing body.

The features of the pointing body extracted by the features extraction section 5 are features including eight vectors indicative of pixel-value gradation directions, defined by a pixel value of a target pixel and pixel values of eight pixels surrounding the target pixel, in respective eight directions in which the surrounding eight pixels are arranged. This method of extracting features is disclosed in, for example, Japanese Patent Application Publication, Tokukai No. 2008-250949 A. The features extraction process carried out by the features extraction section 5 is not limited to a specific one, provided that the shape (particularly, the edge) of the pointing body can be detected. The features extraction section 5 associates extracted features with a corresponding pixel (features region), from which the features have been extracted. The features extraction section 5 then supplies, to the touch position determination section 6, information on the features and the corresponding pixel which are associated with each other.

The touch position determination section 6 identifies a touch position, by carrying out pattern matching with respect to the features region showing the features which have been extracted by the features extraction section 5. The pattern matching is not limited to a specific one, provided that it is possible to appropriately identify where an image of the pointing body is located. The touch position determination section 6 supplies to the application execution section 8 coordinates representing the touch position thus identified.

The touch position determination section 6 compares (i) the features which have been extracted by the features extraction section 5 with (ii) features which are predetermined as features of a pointing body which is in contact with the image sensing screen of the touch panel section 10. In a case where the features (i) match the features (ii), the touch position determination section 6 detects where the image of the pointing body which corresponds to the features extracted by the features extraction section 5 is located. Therefore, in a normal lighting environment, a pointing body which is in contact with the image sensing screen is detected by the processing of the touch position determination section 6, whereas a pointing body which is not in contact with the image sensing screen is not detected by the above processing.

With the use of the coordinates supplied from the touch position determination section 6, the application execution section 8 (i) executes an application corresponding to the coordinates or (ii) carries out processing corresponding to the coordinates in a particular application. The application execution section 8 can execute any kind of application.

### (Details of Processing Carried Out by Pixel Number Finding Section 3 and Pixel Number Determination Section 4)

With reference to Figs. 3 through 5, the following description deals in detail with processing carried out by the pixel number finding section 3 and the pixel number determination section 4.

### (Reflection Recognition Mode)

With reference to Fig. 3, the description first deals in detail with the processing carried out by the pixel number finding section 3 in the reflection recognition mode.

Fig. 3 is an explanatory view illustrating the processing carried out by the pixel number finding section 3 and the pixel number determination section 4 in the reflection recognition mode. (a) of Fig. 3 illustrates how the processing is carried out in a case where position detection can be normally carried out in the reflection recognition mode. (b) of Fig. 3 illustrates how the processing is carried out in a case where intense external light is locally incident in the reflection recognition mode. Histograms in Fig. 3 each show a relationship in a captured image between a pixel value and the number of pixels which have the pixel value. Note in Fig. 3 that the relationship is obtained in a case where the numbers of pixels are arranged in the order of increasing pixel values.

In the reflection recognition mode, upon receipt of light reflected from a finger pad 50a, the touch panel section 10 captures an image containing an image caused by a reflected light spot 60 (see (a) of Fig. 3). The histogram shows (i) a peak 66 which corresponds to the pixel values of pixels in a background region of the reflected light spot 60 and (ii) a peak 67 which corresponds to the pixel values of pixels in the reflected light spot 60. As illustrated in (b) of Fig. 3, in a case where external light having an intensity higher than that of the reflected backlight is locally incident, a light spot 61 is shown in the histogram as a peak 68. According to a conventional arrangement, such a peak 68 is unfortunately detected as light reflected from the finger pad 50a.

The pixel number finding section 3 finds the number of pixels in the captured image which pixels have pixel values larger than a brightness threshold (predetermined threshold) 71 shown in Fig. 3. It follows that, since the number of all pixels in a captured image is constant, the pixel number finding section 3 finds a proportion of pixels each having a pixel value larger than the brightness threshold 71. The brightness threshold 71 is an upper limit of pixel values within which limit external light other than light reflected from the finger pad 50a is not detected instead of light reflected from the finger pad 50a. In other words, the brightness threshold 71 is an upper limit of possible pixel values attained by pixels which captured an image caused by light reflected from the finger pad 50a. With the arrangement, it is possible to regard the pixels each having a value larger than the brightness threshold 71 as capturing an image caused, not by light reflected from the finger pad 50a, but by unnecessary external light.

The pixel number determination section 4 determines whether the number of the pixels each having a value larger than the brightness threshold 71 exceeds a predetermined number of pixels. The predetermined number of pixels can be set as appropriate by the persons skilled in the art. In a case where the predetermined number of pixels is set to a small one, it becomes difficult to determine whether or not unnecessary external light is incident. An incident light spot 61 causes no problem if it is not large enough to be erroneously recognized as an image of a finger pad 50a. Thus, the predetermined number of pixels can be set in consideration of an upper limit of a spot size which causes a light spot not to be recognized as an image of a finger pad 50a.

With the arrangement, it is possible to determine, in a case where the number of the pixels each having a pixel value larger than the brightness threshold 71 exceeds the predetermined number of pixels, that it is difficult to identify where the image of the image sensing object is located in the captured image.

The pixel number finding section 3 can (i) create a histogram similar to the histograms shown in Fig. 3 or (ii) compare, with the brightness threshold 71, respective pixel values of all pixels contained in the captured image so as to count the number of pixels each having a pixel value larger than the brightness threshold 71.

### (Shadow Recognition Mode)

### (First Example)

With reference to Fig. 4, the following description deals in detail with a first example of processing carried out by the pixel number finding section 3 and the pixel number determination section 4, in the shadow recognition mode.

Fig. 4 is an explanatory view illustrating the first example of the processing carried out by the pixel number finding section 3 and the pixel number determination section 4, in the shadow recognition mode. (a) of Fig. 4 illustrates a case in which it is possible to normally carry out detection in the shadow recognition mode. (b) of Fig. 4 illustrates a case in which it is impossible to distinguishably detect two fingers 50. (c) of Fig. 4 illustrates a case in which it is impossible to determine whether a finger 50 is in contact with the touch panel section 10. (d) of Fig. 4 illustrates a case in which intense light incident in numerous directions causes a shadow of a finger 50 to substantially disappear. Histograms in Fig. 4 show (i) a peak 66 which corresponds to the pixel values (values of pixels for an image caused by external light) in a background region and (ii) a peak 67 which corresponds to the pixel values in a shadow of a finger(s) 50.

As illustrated in (c) of Fig. 4, in a case where an image of a shadow of the finger 50 is captured with use of external light, more intense external light results in smaller pixel values of pixels in a captured image, which pixels correspond to the shadow of the finger 50. In other words, more intense external light causes the shadow to be darker. Too intense external light makes it difficult to determine whether the finger 50 is in contact with the touch panel section 10. This is because, in the case where external light is too intense, even a finger 50 which is not in contact with the touch panel section 10 causes a darker shadow (shadow image to the right in (c) of Fig. 4).

Further, as illustrated in Fig. 4(b), in a case where shadows of a plurality of fingers 50 overlap one another, it is difficult to accurately identify where the fingers 50 are located. Such overlapping of the shadows of the plurality of fingers 50 is often caused by relatively intense light emitted from a single light source. In the case where the shadows of the plurality of fingers 50 overlap one another, pixel values of the pixels which correspond to shadows of a region where the plurality of fingers 50 overlap one another tend to be lower than those corresponding to a single finger.

The pixel number finding section 3 finds the number of pixels in the captured image each of which has a pixel value smaller than a brightness threshold (first threshold) 73 shown in Fig. 4. The brightness threshold 73 is a lower limit of pixel values which allow the captured image to be regarded as having been captured, in a lighting environment in which it is possible to (i) determine whether a finger 50 is in contact with the touch panel section 10 and (ii) accurately identify where the fingers 50 are located even in a case where shadows of a plurality of fingers 50 overlap one another. In other words, the brightness threshold 73 is a lower limit of pixel values of pixels in a captured image which pixel values allow an identification of where an image of a shadow of an image sensing object which is in contact with the image sensing screen (light sensor-containing LCD 11) is located.

The pixel number determination section 4 determines whether the number of the pixels each having a pixel value smaller than the brightness threshold 73 exceeds a predetermined number of pixels. The pixel number determination section 4 then supplies a determined result to the touch panel control section 7. The predetermined number of pixels can be set as appropriate by the persons skilled in the art, in consideration of a normal size of an image of a finger pad 50a.

With the arrangement, it is possible to determine whether there exists an image of a shadow of a finger which image corresponds to pixels each having a pixel value smaller than the brightness threshold 73. Consequently, it is possible to determine whether there is a possibility of not appropriately identifying where the finger is located due to intense external light or due to overlapping of finger shadows.

Further, as illustrated in Fig. 4(d), intense light incident in numerous directions causes a shadow of a finger to substantially disappear. This is because in the case where such intense light is incident in numerous directions, the light sensors 12 capture an image containing an image caused by light which is laterally incident on a glass layer of the touch panel section 10. As a result, it is impossible to capture an image of the shadow of the finger even if the finger is in actual contact with the image sensing screen. The corresponding histogram shows peaks 68 and 69 corresponding to the pixel values in regions of (i) incident light and (ii) a shadow of a finger pad 50a, respectively.

The pixel number finding section 3 finds the number of pixels in a captured image which pixels have values larger than a brightness threshold 72 for an external light intensity. The brightness threshold 72 is an upper limit of pixel values which prevent external light from causing a shadow of a finger to disappear.

As such, it is possible to determine, in a case where the number of the pixels each having a value larger than the predetermined threshold 72 exceeds a predetermined number of pixels, that external light causes a shadow of a finger 50 to disappear.

The pixel number determination section 4 determines whether the number of the pixels each having a value larger than the brightness threshold 72 exceeds the predetermined number of pixels. The predetermined number of pixels can be set as appropriate by persons skilled in the art, in consideration of an amount and an intensity of external light which may cause a shadow of a finger to disappear.

In the case of the present example, the pixel number determination section 4 can determine both (i) whether the number of pixels each having a value smaller than the brightness threshold 73 exceeds the corresponding predetermined number of pixels and (ii) whether the number of pixels each having a value larger than the brightness threshold 72 exceeds the corresponding predetermined number of pixels. Then, if a result of either (or both) of the determinations is YES, the pixel number determination section 4 can supply to the touch panel control section 7 a display instruction for instructing the touch panel control section 7 to display a message indicating that it is difficult to identify where a pointing body is located. The display instruction can include a kind of message to be displayed. The touch panel control section 7 displays a message in the touch panel section 10 in response to the above display instruction.

### (Second Example)

With reference to Fig. 5, the following description deals in detail with a second example of the processing carried out by the pixel number finding section 3 and the pixel number determination section 4 in the shadow recognition mode.

Fig. 5 is an explanatory view illustrating the second example of the processing carried out by the pixel number finding section 3 and the pixel number determination section 4 in the shadow recognition mode. (a) of Fig. 5 illustrates a case in which it is possible to normally carry out detection in the shadow recognition mode. (b) of Fig. 5 illustrates a case in which it is possible to detect a single finger 50, but it is impossible to distinguishably detect two fingers 50. (c) of Fig. 5 illustrates a case in which it is impossible to determine whether a finger 50 is in contact with the touch panel section 10. Histograms in Fig. 5 show (i) a peak 66 which corresponds to the pixel values (values of pixels for an image caused by external light) in a background region, (ii) a peaks 67 which corresponds to the pixel values in a region of a shadow of a finger 50 which is in contact with a screen of the light sensor-containing LCD 11, and (iii) a peak 68 which corresponds to the pixel values in a region of a shadow of a finger 50 which is not in contact with the screen of the light sensor-containing LCD 11.

As illustrated in (c) of Fig. 5, more intense external light results in smaller values of pixels in a captured image which pixels correspond to the shadow of the finger 50. In other words, more intense external light causes the shadow to be darker. Too intense external light makes it difficult to determine whether the finger 50 is in contact with the touch panel section 10. This is because in the case where external light is too intense, even a finger 50 which is not in contact with the touch panel section 10 causes a dark shadow.

Also, as illustrated in (b) of Fig. 5, in a case where relatively intense light having an intensity lower than that of light of (c) is incident, it is possible to detect a single finger 50. However, in a case where shadows of a plurality of fingers 50 overlap one another, it is difficult to accurately identify where the respective fingers 50 are located.

The pixel number finding section 3 finds the number of pixels in a captured image such as those described above which pixels have values which fall within each of a plurality of pixel-value ranges defined by a plurality of thresholds, namely a brightness threshold (first threshold) 74 and a brightness threshold (second threshold) 75 both shown in Fig. 5.

The brightness threshold 74 is a lower limit of pixel values which allow the captured image containing an image of a finger 50 to be regarded as having been captured in a lighting environment in which, even in a case where the captured image contains a plurality of fingers 50, it is possible to appropriately identify where respective images of the fingers 50 are located. The brightness threshold 75 is a lower limit of pixel values which allow the captured image containing an image of a finger 50 to be regarded as having been captured in a lighting environment in which, only in a case where the captured image contains a single finger 50, it is possible to appropriately identify where such a finger 50 is located.

In a case where the number of pixels each having a value smaller than the brightness threshold 74 and larger than the brightness threshold 75 exceeds a predetermined number of pixels, it is impossible to appropriately identify where respective images of a plurality of fingers 50 are located, but it is possible to appropriately identify where an image of a single finger 50 is located.

The pixel number finding section 3 finds (i) the number (first-range pixel number) of pixels each having a value of 0 to not larger than the brightness threshold 75 and (ii) the number (second-range pixel number) of pixels each having a value larger than the brightness threshold 75 and smaller than the brightness threshold 74.

The pixel number determination section 4 determines whether the first-range and second-range pixel numbers exceed their corresponding predetermined number of pixels. The pixel number determination section 4 then supplies a result of the determination to the touch panel control section 7. The respective predetermined numbers of pixels for the first-range and second-range pixel numbers can be set separately, or can alternatively be set to an identical number. The predetermined numbers of pixels can be set as appropriate by persons skilled in the art, in consideration of a normal size of an image of a finger pad 50a.

With the arrangement, it is possible to determine (i) whether there exists an image of a shadow of a finger which image corresponds to pixels each having a value smaller than the brightness threshold 74 and larger than the brightness threshold 75, and (ii) whether there exists an image of a shadow of a finger which image corresponds to pixels each having a value not larger than the brightness threshold 75. As a result, it is possible to determine whether there is a possibility that only a single finger 50 can be detected appropriately, but at least one of two fingers 50 cannot be detected accurately.

The processing of the present example can be combined with the processing of the above first example. For example, the brightness threshold 72 can additionally be set in the second example. This increases the number of pixel-value ranges defined by thresholds to four. Further, the pixel number determination section 4 can supply a display instruction to the touch panel control section 7.

### (Example of Simultaneously Determining Difficulty in Detecting Finger and Difficulty in Detecting Stylus)

The above description deals with cases in which the image sensing object (pointing body) is a finger. Thus, the above brightness thresholds serve to identify where a finger is located. The following description deals with an example which involves use of brightness thresholds which can be used regardless of whether the image sensing object is a finger or a stylus. A stylus is a pen having a tip on which a member which reflects backlight is provided. A position of contact by a stylus is determined by capturing an image containing an image caused by backlight which is reflected from the pen tip.

Fig. 6 is an explanatory view illustrating processing carried out by the pixel number finding section 3 and the pixel number determination section 4 in the reflection recognition mode and in the shadow recognition mode in a case where (i) whether it is difficult to detect a finger 50 and (ii) whether it is difficult to detect a stylus are simultaneously determined. (a) of Fig. 6 illustrates a state in which a stylus is in contact with the touch panel section 10 when the external light is dark. (b) of Fig. 6 illustrates a state in which a finger is in contact with the touch panel section 10 when the external light is bright. (c) of Fig. 6 illustrates a state in which a stylus is in contact with the touch panel section 10 when the external light is bright. Histograms in Fig. 6 show (i) a peak 66 which corresponds to the pixel values (values of pixels for an image caused by external light) in the background region, (ii) a peak 67 which corresponds to the pixel values in a region of a shadow of the finger 50, and (iii) a peak 81 which corresponds to the pixel values in a portion of a screen of the light sensor-containing LCD 11 which portion is in contact with a stylus.

As illustrated in (a) of Fig. 6, a stylus can be detected when the external light is dark. However, as illustrated in (c) of Fig. 6, when the external light is bright, backlight reflected from the pen tip is not distinguishable from external light. This makes it impossible to detect the stylus. In the same external light environment, backlight reflected from a finger, on the other hand, can be distinguished from external light (see (b) of Fig. 6). As described above, whether or not an image sensing object can be detected in a given external light environment depends on the image sensing object. Therefore, in this example, brightness thresholds are set so that it is possible to separately determine (i) whether it is difficult to identify where a finger is located and (ii) whether it is difficult to identify where a stylus is located.

The pixel number finding section 3 finds (i) the number of pixels in a captured image such as those described above which pixels have values larger than a finger brightness threshold 76 shown in Fig. 6, and (ii) the number of pixels in the captured image which pixels have values larger than a stylus brightness threshold 77. The finger brightness threshold 76 is an upper limit of a pixel-value range within which determination of whether a finger 50 is in contact with the touch panel section 10 can be regarded as possible. The stylus brightness threshold 77 is an upper limit of a pixel-value range within which determination of whether a stylus is in contact with the touch panel section 10 can be regarded as possible.

The pixel number determination section 4 determines (i) whether the number of the pixels each having a value larger than the finger brightness threshold 76 exceeds a predetermined number of pixels, and (ii) whether the number of the pixels each having a value larger than the stylus brightness threshold 77 exceeds a predetermined number of pixels. The pixel number determination section 4 then supplies a result of the determination to the touch panel control section 7. More specifically, the pixel number determination section 4 determines (i) whether the number of the pixels each having a value larger than the stylus brightness threshold 77 exceeds the corresponding predetermined number of pixels (first determination), and (ii) whether the number of the pixels each having a value larger than the finger brightness threshold 76 exceeds the corresponding predetermined number of pixels (second determination). Then, if results of the first and second determinations are both YES, the pixel number determination section 4 outputs a determination result that neither a stylus nor a finger can be detected. If the results of the first and second determinations are YES and NO, respectively, the pixel number determination section 4 outputs a determination result that a stylus cannot be detected, but a finger can be detected. If the results of the first and second determinations are both NO, the pixel number determination section 4 outputs a determination result that both a stylus and a finger can be detected. Further, as described above, the pixel number determination section 4 can supply to the touch panel control section 7 a display instruction based on the determination result.

The respective predetermined numbers of pixels for the finger brightness threshold 76 and the stylus brightness threshold 77 can be set separately, or can alternatively be set to an identical number.

The predetermined numbers of pixels can be set as appropriate by persons skilled in the art, in consideration of a normal size of an image of each of a finger pad 50a and a stylus.

As described above, the pixel number finding section 3 finds the pixel numbers with use of the brightness thresholds each corresponding to a kind of the image sensing object. As such, it is possible to simultaneously determine, on the basis of an external light intensity, (i) whether an image of a finger 50 can be detected and (ii) whether an image of a stylus can be detected.

The present example deals with an arrangement in which (i) whether a finger 50 can be detected and (ii) whether a stylus can be detected are simultaneously determined. In a case where a user can switch, with use of, e.g., a switch, between (i) use of a finger 50 and (ii) use of a stylus for an input, the determination can be carried out with use of only either one of the finger brightness threshold 76 and the stylus brightness threshold 77.

In addition, it is possible to apply, to the examples illustrated in Figs. 3 through 5, a technical idea of using a threshold according to a kind of an image sensing object to determine whether it is possible to identify where the image sensing object which is in contact with the touch panel section 10 is located.

### (Example of Message Display)

The following description deals with an example of message display with reference to Fig. 7. Fig. 7 is a view illustrating an example message and an example icon both informing a user that it is impossible to accurately identify where a finger is located.

If the pixel number determination section 4 determines that the captured image has not been captured in a lighting environment in which it is possible to appropriately identify where a pointing body is located, the touch panel control section 7 displays in the touch panel section 10 a message or an icon each indicating the above determination. The message is, for example, "Your finger cannot be detected due to the current environment. Move to another area." (see Fig. 7(a)).

This message can be replaced by a message informing a user of a reason why it is impossible to accurately identify where a pointing body is located. Examples of such a message include "Your finger cannot be detected due to the current environment. Place the device in an area with no unnecessary external light.", "Your finger cannot be detected due to the current environment. Move to an area, such as a shaded area, with no direct light.", and "Your finger cannot be detected due to the current environment. Avoid exposing the device to overly intense light."

In the case of the second example described above, the touch panel control section 7 can display, e.g., (i) a message indicating that it is possible to accurately identify where a single finger is located, but it is impossible to accurately identify where a plurality of fingers are located, or (ii) a message indicating that it is impossible to accurately identify where even a single finger is located. In other words, the touch panel control section 7 can inform a user of the number of fingers which can be located accurately.

As illustrated in Fig. 7(b), the touch panel control section 7 can instead display an icon indicating that it is impossible to identify where a finger is located. Alternatively, the touch panel control section 7 can use a voice or an alarm sound to inform a user that it is impossible to accurately identify where a finger is located. As described above, the informing section of the present invention may be, instead of the touch panel section 10, a speaker which produces the above sounds. Alternatively, the touch position detection device 1 may also be arranged so that a light emitting section (e.g., an LED; light emitting diode) emits light if it is impossible to accurately identify where a finger is located and that a sign showing "undetectable" or the like is provided near the light emitting section. In this case, the light emitting section corresponds to the informing section of the present invention.

The above messages and an image of the icon can simply be stored in the memory section 40 in advance so that the touch panel control section 7 can acquire from the memory section 40 a message to be displayed or the image of the icon.

### (Flow of Processing Carried Out by Touch Position Detection Device 1)

With reference to Fig. 8, the following description deals with an example flow of processing carried out by the touch position detection device 1. Fig. 8 is a flowchart illustrating the example flow of a touch position detection process carried out by the touch position detection device 1.

First, the light sensors 12 contained in the light sensor-containing LCD 11 capture an image (captured image) containing an image of a finger 50. The image captured by the light sensors 12 is supplied to the image adjustment section 2 via the AD converter 13 (S1).

The image adjustment section 2, upon receipt (reception step) of the captured image, carries out calibration (i.e., adjustment of a gain and an offset of the captured image) and other processes. The image adjustment section 2 supplies the adjusted captured image to the pixel number finding section 3, and also stores the captured image in the memory section 40 (S2).

The pixel number finding section 3, upon receipt of the captured image, finds (pixel number finding step) a pixel number as described above with respect to the captured image. The pixel number finding section 3 supplies the pixel number thus found to the pixel number determination section 4 (S3).

The pixel number determination section 4 determines whether the pixel number found by the pixel number finding section 3 equal to or smaller than a predetermined number of pixels (threshold)(S4). If the found pixel number is equal to or smaller than the predetermined number of pixels (YES in S5), the pixel number determination section 4 supplies to the features extraction section 5 a features extraction instruction for instructing the features extraction section 5 to extract features.

The features extraction section 5, upon receipt of the features extraction instruction from the pixel number determination section 4, receives the adjusted captured image from the memory section 40. The features extraction section 5 extracts, from respective pixels in the captured image, features (edge features) indicative of a feature of the pointing body by edge detection. The features extraction section 5 then supplies, to the touch position determination section 6, information on (i) the extracted features and (ii) positions (coordinates of the pixels) of the pixels (feature regions) having the features (S6).

The touch position determination section 6, upon receipt of the information on the features and the positions of the feature regions, finds a touch position by carrying out pattern matching with respect to the feature regions. The touch position determination section 6 then supplies the coordinates representing the found touch position to the application execution section 8 (S7).

The application execution section 8 executes an application with use of the touch position received from the touch position determination section 6 (S8).

If the pixel number found by the pixel number finding section 3 exceeds the predetermined number of pixels (NO in S5), the pixel number determination section 4 supplies a result of the determination to the touch panel control section 7.

The touch panel control section 7, upon receipt of the determination result from the pixel number determination section 4, displays in the touch panel section 10 a message corresponding to the determination result (S9).

Alternatively, even if the pixel number found by the pixel number finding section 3 exceeds the predetermined number of pixels, the touch position detection device 1 can display the above message and also find a position of an image of the pointing body on the basis of the captured image as then acquired.

### (Variations)

The present invention is not limited to the description of the embodiment above, but may be altered by a skilled person within the scope of the claims. Any embodiment based on a proper combination of the technical means disclosed in the embodiment is encompassed in the technical scope of the present invention.

For example, a device may include the image adjustment section 2, the pixel number finding section 3, the pixel number determination section 4, the touch position determination section 6, and the touch panel control section 7, to function as an image analysis device.

The various blocks in the touch position detection device 1, especially, the main control section 9, may be implemented by hardware or software executed by a CPU as follows.

The touch position detection device 1 includes a CPU (central processing unit) and memory devices (storage media). The CPU executes instructions contained in control programs, realizing various functions. The memory devices may be a ROM (read-only memory) containing programs, a RAM (random access memory) to which the programs are loaded, or a memory containing the programs and various data. The objectives of the present invention can be achieved also by mounting to the device 1 a computer-readable storage medium containing control program code (executable programs, intermediate code programs, or source programs) for control programs (image analysis programs) for the device 1, which is software realizing the aforementioned functions, in order for a computer (or CPU, MPU) to retrieve and execute the program code contained in the storage medium.

The storage medium may be, for example, a tape, such as a magnetic tape or a cassette tape; a magnetic disk, such as a floppy disk or a hard disk, or an optical disc, such as a CD-ROM/MO/MD/DVD/CD-R; a card, such as an IC card (memory card) or an optical card; or a semiconductor memory, such as a mask ROM/EPROM/EEPROM/flash ROM.

The touch position detection device 1 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, a wired line, such as IEEE 1394, USB, an electric power line, a cable TV line, a telephone line, or an ADSL; or wireless, such as infrared (IrDA, remote control), Bluetooth, 802.11 wireless, HDR (high data rate), a mobile telephone network, a satellite line, or a terrestrial digital network. The present invention encompasses a carrier wave, or data signal transmission, in which the program code is embodied electronically.

### Alternative Description of the Present Invention

The image analysis device may preferably further include: pixel number finding means for finding, in the captured image, the number of first pixels each having a pixel value which falls outside a predetermined pixel-value range; and pixel number determination means for determining whether the number of pixels found by the pixel number finding means exceeds a predetermined number of pixels, the informing section informing that it is difficult to identify where the image of the image sensing object is located in the captured image, in a case where the pixel number determination means determines that the number of pixel found by the pixel number finding means exceeds the predetermined number of pixels.

According to the above arrangement, the pixel number finding means finds the number of pixels in the captured image containing the image of the image sensing object which pixels have pixel values which fall outside the predetermined pixel-value range. For example, the pixel number finding means finds the number of pixels each having a value larger than a predetermined pixel value. The pixel number determination means then determines whether the pixel number found by the pixel number finding means exceeds a predetermined number of pixels. If the pixel number found by the pixel number finding means exceeds the predetermined number of pixels, the informing section informs the user of difficulty in the locating.

As such, it is possible to determine, by analyzing values of the pixels in the captured image, whether the image sensing object can be detected appropriately.

The image analysis device may preferably be arranged such that the captured image includes an image formed by reflected light obtained when light emitted from the image sensing screen to the image sensing object is reflected from the image sensing object; the pixel number finding means finds the number of pixels, in the captured image, each of which has a pixel value of greater than a predetermined threshold; and the predetermined threshold is an upper limit of pixel values of pixels in which the captured image can be regarded as having been captured in a lighting environment in which it is possible to appropriately identify where the image of the image sensing object is located in the captured image.

In a case of capturing an image containing an image of an image sensing object with use of light reflected from the image sensing object, the reflected light has an intensity within a certain range, since light emitted from a light source to the image sensing object normally has a constant intensity. In this case, a spot of incident intense external light other than the light reflected from the image sensing object causes an image of a spot to be contained in a captured image, the image corresponding to pixels each having a value larger than pixel values of the image of the image sensing object. Such a spot is likely to be erroneously recognized as the image of the image sensing object when the image of the image sensing object is located.

According to the above arrangement, the captured image contains an image caused by light emitted from the image sensing screen to the image sensing object and then reflected from the image sensing object. In other words, the image analysis device analyzes an image which is captured with use of light emitted to the image sensing object and then reflected from the image sensing object and which contains the image of the image sensing object. The pixel number finding means finds the number of pixels in the captured image which pixels have pixel values larger than the predetermined upper limit. This predetermined upper limit is an upper limit of a pixel values which allow the captured image to be regarded as having been captured in a lighting environment in which it is possible to appropriately identify where the image of the image sensing object is located. More specifically, the predetermined upper limit is an upper limit of a range of pixel values which can be attained by pixels corresponding to the image caused by the light.

The above arrangement makes it possible to determine, in a case where the number of the pixels each having a value larger than the predetermined upper limit exceeds the predetermined number of pixels, that it is difficult to identify where the image of the image sensing object in the captured image is located.

As such, in the case where it is difficult to identify where the image of the image sensing object is located in the captured image due to external light, the user can be informed of such difficulty.

The image analysis device may preferably be arranged such that the image of the image sensing object includes an image of a shadow occurred when external light incident on the image sensing screen is blocked by the image sensing object; the pixel number finding means finds, in the captured image, the number of pixel values of pixels each of which pixels is smaller than a first threshold; and the first threshold is a lower limit of pixel values of pixels in which the captured image can be regarded as having been captured in a lighting environment in which it is possible to appropriately identify where the image of the image sensing object is located in the captured image.

According to the above arrangement, the captured image contains an image of a shadow caused by the image sensing object which blocks external light incident on the image sensing screen. In other words, the image analysis device analyzes an image which is captured with use of external light and which contains the image of the shadow of the image sensing object. The pixel number finding means finds the number of pixels in the captured image which pixels have pixel values smaller than the first threshold. This first threshold is a lower limit of a pixel value which allow the captured image to be regarded as having been captured in a lighting environment in which it is possible to appropriately identify where the image of the image sensing object is located in the captured image. In other words, the first threshold is a lower limit of a range of values of pixels in a captured image within which range it is possible to identify where the image of a shadow of the image sensing object which is in contact with the image sensing screen is located.

In a case of capturing an image containing an image of a shadow of an image sensing object with use of external light, more intense external light results in smaller pixel values of pixels in a captured image, which pixels correspond to the shadow of the image sensing object. In other words, more intense external light causes the shadow to be darker. Too intense external light makes it difficult to determine whether the image sensing object is in contact with the image sensing screen. This is because too intense external light causes even a shadow of an image sensing object which is not in contact with the image sensing screen to be dark.

In a case where shadows of a plurality of image sensing objects overlap one another, pixel values of the pixels which correspond to shadows of a region where the plurality of image sensing objects overlap one another are low. Consequently, such overlapping of the shadows of the plurality of image sensing objects makes it difficult to accurately identify where the respective image sensing objects are located.

In view of this, the pixel number finding means finds the number of pixels each having a value smaller than the first threshold. This makes it possible to determine whether there is a possibility that an image sensing object cannot be detected appropriately (i) due to intense external light, or (ii) due to overlapping of shadows of a plurality of image sensing objects.

The image analysis device may preferably be arranged such that the pixel number finding means finds, in the captured image, the number of pixels each of which has a pixel value of smaller than the first threshold and greater than a second threshold; and the second threshold is a lower limit of pixel values of pixels in which the captured image can be regarded as having been captured in a lighting environment in which it is possible to appropriately identify where the image of the image sensing object is located in the captured image only in a case where the image of the image sensing object includes a single image of the image sensing object.

According to the above arrangement, the pixel number finding means finds the number of pixels each having a value smaller than the first threshold and larger than the second threshold. The first threshold is a lower limit of a pixel values which allow the captured image to be regarded as having been captured in a lighting environment in which, even in a case where there are a plurality of image sensing objects, it is possible to appropriately identify where the respective plurality of image sensing objects are located in the captured image. The second threshold is a lower limit of a pixel values which allow the captured image to be regarded as having been captured in a lighting environment in which, only in a case where the captured image contains an image of a single image sensing object, it is possible to appropriately identify where an image of such an image sensing object is located in the captured image.

In a case where the number of pixels each having a value smaller than the first threshold and larger than the second threshold exceeds the predetermined number of pixels, it is impossible to appropriately identify where a plurality of image sensing objects are located, but it is possible to appropriately identify where an image of a single image sensing object is located.

This allows the user to be informed that, only in a case where the captured image contains a single image sensing object, it is possible to appropriately detect such an image sensing object, and that, in a case where the captured image contains two image sensing object, it may not be possible to accurately detect the respective image sensing objects. This can prompt the user to use a single image sensing object for an input, or to alter the lighting environment.

The image analysis device may preferably be arranged such that the pixel number finding means finds the number of pixels in accordance with the predetermined thresholds which correspond to a kind of the image sensing object.

The threshold varies depending on the image sensing object. For example, a finger as the image sensing object would be in contact with the image sensing screen by an area different from an area by which a stylus as the image sensing object would be in contact with the image sensing screen. Thus, for example, in the case where an image is captured with use of external light, a threshold for a stylus is smaller than a threshold for a finger.

The above arrangement makes it possible to more appropriately determine, in accordance with the kind of the image sensing object, whether it is possible to identify where the image of the image sensing object is located in the captured image.

The technical scope of the present invention further includes: a control program for operating any one of the above image analysis devices, the control program causing a computer to function as each of the pixel number finding means and the pixel number determination means; and a computer-readable storage medium storing the control program.

The technical scope of the present invention further includes an image sensing device including any one of the above image analysis device, the image sensing device including: an image sensing section by which the captured image is captured, the image analysis device analyzing the captured image captured by the image sensing section.

### Industrial Applicability

In a case where it is difficult to accurately identify where an image sensing object is located, the present invention allows a user to be informed of such difficulty. Therefore, the present invention is applicable to touch panel-equipped devices, such as a position detection device and an input device, for use in various lighting environments.

### Reference Signs List

- 1: touch position detection device (image analysis device, image sensing device)
- 3: pixel number finding section (pixel number finding means)
- 4: pixel number determination section (pixel number determination means)
- 9: main control section (image analysis device)
- 10: touch panel section (image sensing section)
- 11: light sensor-containing LCD (image sensing screen, informing section)
- 12: light sensor
- 50: finger (image sensing object)

## Claims

1. An image analysis device (1) for identifying where an image of an image sensing object is located in an captured image, by analyzing the captured image containing an image of the image sensing object which is in contact with an image sensing screen (11),
the image analysis device (1), comprising:
an informing section (10) for, in accordance with a result of the analyzing of the captured image, informing that it is difficult to identify where the image of the image sensing object is located in the captured image.

2. The image analysis device (1) according to claim 1, further comprising:
pixel number finding means (3) for finding, in the captured image, the number of pixels each having a pixel value which falls outside a predetermined pixel-value range; and
pixel number determination means (4) for determining whether the number of pixels found by the pixel number finding means (3) exceeds a predetermined number of pixels,
the informing section (10) informing that it is difficult to identify where the image of the image sensing object is located in the captured image, in a case where the pixel number determination means (4) determines that the number of pixel found by the pixel number finding means (3) exceeds the predetermined number of pixels.

3. The image analysis device (1) according to claim 2,
wherein:
the captured image includes an image formed by reflected light obtained when light emitted from the image sensing screen (11) to the image sensing object is reflected from the image sensing object;
the pixel number finding means (3) finds the number of pixels, in the captured image, each of which has a pixel value of greater than a predetermined threshold; and
the predetermined threshold is an upper limit of pixel values of pixels in which the captured image can be regarded as having been captured in a lighting environment in which it is possible to appropriately identify where the image of the image sensing object is located in the captured image.

4. The image analysis device (1) according to claim 2,
wherein:
the image of the image sensing object includes an image of a shadow occurred when external light incident on the image sensing screen (11) is blocked by the image sensing object;
the pixel number finding means (3) finds, in the captured image, the number of pixel values of pixels each of which pixels is smaller than a first threshold ; and
the first threshold is a lower limit of pixel values of pixels in which the captured image can be regarded as having been captured in a lighting environment in which it is possible to appropriately identify where the image of the image sensing object is located in the captured image.

5. The image analysis device (1) according to claim 4,
wherein:
the pixel number finding means (3) finds, in the captured image, the number of pixels each of which has a pixel value of smaller than the first threshold and greater than a second threshold; and
the second threshold is a lower limit of pixel values of pixels in which the captured image can be regarded as having been captured in a lighting environment in which it is possible to appropriately identify where the image of the image sensing object is located in the captured image only in a case where the image of the image sensing object includes a single image of the image sensing object.

6. The image analysis device (1) according to any one of claims 3 to 5, wherein the pixel number finding means (3) finds the number of pixels in accordance with the predetermined thresholds which correspond to a kind of the image sensing object.

7. An image analysis program for operating an image analysis device (1) recited in any one of claims 2 to 6, the image analysis program causing a computer to function as each of the pixel number finding means (3) and the pixel number determination means (4).

8. A computer-readable storage medium storing the image analysis program according to claim 7.

9. An image analysis method for use in an image analysis device (1) for identifying where an image of an image sensing object is located in an captured image, by analyzing the captured image containing an image of the image sensing object which is in contact with an image sensing screen (11),
the image analysis method, comprising the step of:
informing, in accordance with a result of the analyzing of the captured image, that it is difficult to identify where the image of the image sensing object is located in the captured image.

10. An image sensing device (1) comprising the image analysis device (9) recited in any one of claims 1 to 6, comprising:
an image sensing section (10) by which the captured image is captured,
the image analysis device (9) analyzing the captured image captured by the image sensing section (10).
